# EUROPÄISCHE PATENTSCHRIFT

(11) **EP 1 214 567 B1**
(45) Veröffentlichungstag und Bekanntmachung des Hinweises auf die Patenterteilung: **24.06.2009**
(21) Anmeldenummer: 00962200.2
(22) Anmeldetag: 03.08.2000
(51) Int. Cl.: G01F 23/24

(54) **MIKROSENSOR ZUR POSITIONSMESSUNG VON FLUESSIGKEITEN IN KAPILLAREN**
MICROSENSOR FOR MEASURING THE POSITION OF LIQUIDS IN CAPILLARIES
MICROCAPTEUR POUR MESURER LA POSITION DE LIQUIDES DANS DES CAPILLAIRES

(30) Priorität: 15.09.1999 DE 19944331
(43) Veröffentlichungstag der Anmeldung: 19.06.2002
(73) Patentinhaber: Fraunhofer-Gesellschaft zur Förderung der angewandten Forschung e.V., 80686 München (DE)
(72) Erfinder: LISEC, Thomas, D-25524 Itzehoe (DE); WAGNER, Bernd, D-25582 Looft (DE); QUENZER, Hans, Joachim, D-25524 Itzehoe (DE)
(86) Internationale Anmeldenummer: PCT/DE2000/002609
(87) Internationale Veröffentlichungsnummer: WO 2001/020271

(56) Entgegenhaltungen:
- EP-A- 0 404 479
- DE-A- 19 548 219
- US-A- 4 169 377
- US-A- 5 148 708

## Beschreibung

Die Erfindung betrifft einen Mikrosensor zur Positionsmessung von Flüssigkeiten in Kapillaren, der sich besonders gut zur Anwendung bei Pipettierautomaten in der Labormedizin sowie in der Pharmaindustrie eignet.

Bei der Untersuchung von Krankheitsbildern oder Routine-Gesundheitskontrollen stützt sich die moderne Medizin zunehmend auf die quantitative Bestimmung relevanter Substanzen in Körperflüssigkeiten. Die Anzahl der zu überwachenden Substanzen erhöht sich ständig, ebenso wie die Häufigkeit der Tests. Höhere Analysezahlen bei gleichzeitig abnehmenden Kosten erfordern vor allem eine Senkung des Bedarfs an Reagenzien, deren Preis oftmals erheblich ist. Tendenziell ist somit das präzise Dosieren möglichst geringer Flüssigkeitsmengen zentrales Entwicklungsziel. Angestrebt wird ein Volumenbereich von 0.1 bis 20 µl.

Der Dosiervorgang besteht darin, daß definierte Mengen von Proben und Reagenzien aus Ausgangsbehältern auf Mikrotiterplatten mit vielen einzelnen Reaktionskammern (Wells) verteilt werden müssen. Eine herkömmliche Mikrotiterplatte aus Kunststoff enthält z.B. 96 Wells mit jeweils 500µl Volumen in einem Raster von 9mm. Moderne Pipetiersysteme können mittels schrittmotorgesteuerter Spritzenpumpen mit Präzisions-Kolbenspritzen zwischen 1 und einigen 100 µl einer Flüssigkeit mit einer Genauigkeit von einigen Prozent dosieren. Zumeist sind acht getrennt steuerbare Pipetten parallel angeordnet, so daß eine Mikrotiterplatte in mehreren Arbeitsgängen befüllt werden muß. Dadurch wird der Durchsatz begrenzt und bei kinetischen Tests das Meßergebnis beeinflußt. Derzeit existieren Geräte die 96 Pipetten enthalten. Diese sind jedoch nicht getrennt ansteuerbar, d.h. bei jedem Dosiervorgang wird von allen Pipetten die gleiche Menge abgegeben. Bei vielen Anwendungen wäre ein separates Betätigen der Pipetten günstiger. Um in einem Array getrennt ansteuerbarer Pipetten Flüssigkeitsmengen von 0,1 bis 20 µl mit hoher Genauigkeit dosieren zu können, muß der Dosiervorgang an jeder einzelnen Pipette aktiv überwacht werden.

Im Verlauf einer quantitativen Analyse werde Proben und Reagenzien mittels einer Spritzenpumpe über eine Flüssigkeitssäule nacheinander in die entsprechenden Wells der Mikrotierplatte pipettiert. Zur Vermeidung einer Kontamination wird die Arbeitsflüssigkeit üblicherweise durch eine Luftblase von der Probe bzw. dem Reagenz getrennt. Nachdem es in den Wells zur Reaktion gekommen ist, wird die Konzentration eines der Reaktionsprodukte photometrisch bestimmt und daraus die Konzentration der gesuchten Probenkomponente berechnet.

Das während eines Pipetiervorganges abgegebene Probenvolumen ergibt sich aus dem Kolbenvorschub der Spritzenpumpe. Das Probenvolumen ist jedoch in gleicher Weise durch den Füllstand der Probenflüssigkeit in der Pipette vor und nach dem Dosiervorgang definiert.

### Stand der Technik

Füllstandssensoren zur Überwachung von Flüssigkeiten in Reservoirs oder Tanks sind bereits seit langem bekannt. Neben Sensoren, basierend auf einem Schwimmkörper, existieren eine Vielzahl von Systemen ohne bewegliche Teile. Diese basieren z.B. auf optischen oder elektrischen Meßverfahren.

In US 5138880 wird ein kapazitiver Sensor, bestehend aus zwei konzentrischen Zylindern, die entlang der Meßachse in ein dielektrisches Medium eintauchen, offenbart. Die Zylinder sind in eine Anzahl diskreter Kondensatoren unterteilt. Die Kapazität jedes einzelnen Kondensators hängt davon ab, ob sich Luft oder das zu überwachende Medium zwischen den Elektroden befindet. Durch Vergleich der Kapazitäten läßt sich die Füllhöhe des Mediums im Behälter quasidigital mit einer Genauigkeit entsprechend der Anzahl der Meßsegmente bestimmen. Das kapazitive Meßprinzip kann auch in Form eines planaren Sensors eingesetzt werden. Diese Art von Sensoren muß für jede Flüssigkeit kalibriert werden.

In leitenden Flüssigkeiten kann der Füllstand potentiometrisch bestimmt werden. Als Meßsonde kann ein stabförmiger Widerstand, der senkrecht in die Flüssigkeit eintaucht und zusammen mit dieser die Widerstände einer Brückenschaltung bildet, dienen. Der Spannungsabfall am Widerstand, abgegriffen über die Flüssigkeit, ist proportional zum Flüssigkeitspegel. Ein Beispiel hierfür ist in US 5146785 offenbart. Hier ist die Meßsonde zusätzlich in eine Reihe von Einzelwiderständen unterteilt, wodurch ein stufenförmiges, quasidigitales Ausgangssignal entsteht.

Eine weiteres elektrisches Sensorprinzip basiert auf Leitfähigkeitsmessungen. Dazu wird zwischen jeweils zwei Elektroden eine Wechselspannung im kHz-Bereich angelegt und der Strom zwischen den Elektrodenpaaren gemessen. Ein Beispiel hierfür ist in US 5719556 offenbart.

Die elektrischen Flüssigkeitsstandmeßvorrichtungen nach dem Stand der Technik eignen sich nicht für die Messung der Position von Flüssigkeiten in Kapillaren. Ihr Einsatz beschränkt sich auf die Füllstandsmessung z.B. in Tanks.

### Gelöste Aufgabe

Der Erfindung liegt die Aufgabe zugrunde, eine Vorrichtung und Verfahren zum Betreiben der Vorrichtung zur elektrischen Positionsmessung von Flüssigkeitsständen in Kapillaren, insbesondere in Dosiervorrichtungen, anzugeben, welche günstig zu produzieren ist sowie zuverlässig und präzise arbeitet.

### Beschreibung

Gemäß der vorliegenden Erfindung wird die Aufgabe durch die Merkmale des Anspruches 1 gelöst. Die vorliegende Erfindung stellt darüber hinaus in den Ansprüchen 10 bis 16 auch Verfahren zum Betreiben des Sensors zur Verfügung.

Die bevorzugten Ausführungsformen sind Gegenstand der abhängigen Ansprüche.

Der erfindungsgemäße Mikrosensor zur Positionsmessung von Flüssigkeiten in Kapillaren beruht auf dem Prinzip von Leitfähigkeitsmessungen. Dabei ist jedoch nur eine Änderung der Leitfähigkeit für das Messprinzip wesentlich. Die Absoluthöhe der Leitfähigkeit der Arbeitsflüssigkeit spielt eine untergeordnete Rolle.

In der Kapillare befindet sich eine Gasblase, die auf beiden Seiten von der Arbeitslösung umschlossen ist und innerhalb der Kapillare über einem Sensorchip hin- und her bewegt werden kann. Anstelle der Gasblase kann auch eine nichtleitende Flüssigkeit verwendet werden, die mit der Arbeitslösung nicht mischbar ist. Im Folgenden wird, ohne Einschränkung der Allgemeinheit, nur von einer Blase gesprochen. Wesentlich ist, dass zwischen Arbeitsflüssigkeit und Blaseninhalt ein signifikanter Leitfähigkeitsunterschied besteht. Vorstellbar ist daher auch, dass die Arbeitsflüssigkeit nicht leitend ist und die Blase aus einer leitfähigen Flüssigkeit besteht. Es befindet sich also mindestens eine Grenze zwischen zwei unterschiedlichen Leitfähigkeiten der Kapillarenfüllung im Bereich über dem Sensorelement.

Der Sensorchip besteht aus einem Substrat - bevorzugt aus Silizium, Glas oder Kunststoff.

Darauf sind mikrostrukturierte, teilpassivierte Metallelekroden, bevorzugt aus Platin, Iridium oder Gold aufgebracht. Iridium zeichnet sich durch einen besonders geringen Polarisationswiderstand in wässriger Lösung aus. Die Elektroden bestehen aus Teilelektroden, welche untereinander mit elektrischen Verbindungen vernetzt sind. Die sich paarweise gegenüberliegenden Teilelektroden weisen bevorzugt immer den gleichen Abstand auf und/oder die Abstände der Teilelektrodenpaare in Längsrichtung des Sensorelements sind über die gesamte Länge des Sensorelements bevorzugt konstant und/oder die Anzahl der Teilelektrodenpaare pro Elektrodenpaar ist bevorzugt konstant. Die Teilelektroden von bevorzugt zwei Elektroden stehen sich paarweise bevorzugt mit einem konstanten Abstand als Teilelektrodenpaare gegenüber. Die sich wiederholende Grundgeometrie (Mäander) besteht also aus bevorzugt zwei Elektroden, welche wiederum aus Teilelektrodenpaaren bestehen. Diese Grundgeometrie wiederholt sich periodisch über die gesamte Sensorchiplänge. Der Abstand zwischen den Teilelektrodenpaaren in Längsrichtung, d.h. in Richtung der zu messenden Blasenbewegung, ist, in bevorzugter Weise, stets derselbe und liegt bei einer bevorzugten Ausführungsform im Bereich von 100 µm. Dies gilt auch bei benachbarten Teilelektrodenpaaren, welche zu benachbarten Mäandern gehören. Dabei sind bevorzugt die elektrischen Verbindungen zwischen den Teilelektroden der Elektroden mit einer passivierenden Schicht überzogen, wogegen die Teilelektroden selbst die sensoraktiven Bereiche des Sensorchips darstellen und sich daher direkt an der Oberfläche, welche mit der Arbeitsflüssigkeit in Berührung kommt, befinden. Der Sensor wird so seitlich an der Kapillare, welche z.B. aus Glas oder Kunststoff besteht, angebracht, dass sich die aktiven Bereiche der Elektroden, also die Teilelektroden, im Innenraum der Kapillare befinden. Die Anschlüsse (Bondpads) der Elektroden der einzelnen Mäander liegen dagegen außerhalb der Kapillare. Hierzu wird die Kapillarenwand partiell durch den Sensorchip ersetzt.

Befindet sich eine leitfähige Flüssigkeit in der Kapillare und wird eine Spannung angelegt, so fließt ein Strom zwischen den gegenüberliegenden Teilelektroden eines Mäanders. Die Impedanz des Mäanders wird unter anderem von der benetzten Elektrodenfläche, d.h. der Anzahl der benetzten Teilelektrodenpaare, bestimmt. Mit zunehmender benetzter Fläche nimmt sie ab. Dieser Effekt kann zur Detektion der Position einer Luftblase oder allgemein einer Leitfähigkeitsgrenze, die den Mäander ganz oder teilweise überdeckt, bzw. im Falle einer einzelnen Leitfähigkeitsgrenze, die sich über dem Mäander befindet, ausgenutzt werden.

Im Folgenden wird zur Beschreibung der Funktionsweise des Sensors ohne Einschränkung der Allgemeinheit von einer Blase gesprochen. Die Aussagen gelten jedoch auch für das Vorhandensein einer einzigen Leitfähigkeitsgrenze. Es wird dann nicht eine Blasenposition bestimmt sondern die Lage der Leitfähigkeitsgrenze zwischen zwei Teilelektrodenpaaren eines Mäanders oder die Lage der Leitfähigkeitsgrenze zwischen zwei Mäandern. Eine Blase stellt einen Spezialfall dar, bei dem zwei Leitfähigkeitsgrenzen innerhalb der Kapillarenfüllung liegen. Bei einer bevorzugten Anordnung mit einem erfinderischen Sensorelement zur Vermessung einer Kapillarenfüllung ist die Blase gasgefüllt und/oder ist die Länge der Blase im Bereich der doppelten Ausdehnung eines Elektrodenpaares in Längsrichtung und/oder handelt es sich auf beiden Seiten der Blase um dieselbe Arbeitsflüssigkeit.

Die Position der Blase lässt sich im Ruhezustand aus dem Vergleich der Widerstandswerte aller Mäander ermitteln. Unabhängig von der konkreten Arbeitsflüssigkeit zeigen alle von der Flüssigkeit benetzten Mäander den gleichen minimalen Widerstandswert, Ist die Blase ausreichend groß, so dass mindestens ein Mäander vollständig von ihr überdeckt wird, ergibt sich für diesen Mäander ein maximaler Widerstandswert. Die angrenzenden, nur teilweise bedeckten Mäander weisen Zwischenwerte des Widerstandes auf. Zur Bestimmung der genauen Position der Flüssigkeitsoberfläche im Zwischenbereich eines Mäanders ist die Kenntnis der Form des Widerstandsverlaufes (Referenzwiderstandskurve) beim Überstreichen eines Mäanders und des Maximal- und Minimalwertes des Widerstandes des betreffenden Mäanders notwendig. Durch Interpolation auf die Kurve bekannter Form und mit bekanntem Minimal- bzw. Maximalwert kann dann jeder Zwischenwiderstandswert einem bestimmten Teilelektrodenpaar des entsprechenden Mäanders zugeordnet und somit die Blasenposition oder Leitfähigkeitsgrenzenposition genau bestimmt werden.

Aus der detektierten Position der Blase oder der Leitfähigkeitsgrenze vor und nach einer Bewegung derselben, kann die zurückgelegte Wegstrecke ermittelt werden.

Sind die Benetzungseigenschaften der Arbeitsflüssigkeit gegenüber dem Sensorelement so, dass sich kein dauerhafter Flüssigkeitsfilm auf dem Sensorelement bildet und ist die Wanderungsgeschwindigkeit der Blase nicht zu hoch, dann treten während der Bewegung der Blase über die Teilelektrodenpaare eines Mäanders hinweg charakteristische abrupte Wderstandsänderungen (Sprünge) auf. Im Falle einer wässrigen Lösung bedeutet dies eine hydrophobe Oberfläche des Sensorelements, wobei die Lösung jedoch nicht so stark abgestoßen werden darf, dass sich keine Benetzung, in den Bereichen des Sensorelements, welche von der Arbeitsflüssigkeit überdeckt sind, ausbilden kann. Idealer Weise wird das Sensorelement immer exakt dort von der Arbeitsflüssigkeit benetzt, wo es vom Arbeitsflüssigkeitsstand überdeckt ist. Entsprechend weist die Sensorchipoberfläche Benetzungseigenschaften derart auf, dass die Grenzen der Flüssigkeitsbenetzung der Sensoroberfläche dem Flüssigkeitsstand entsprechen. Werden alle Mäander parallel überwacht, kann aus der Gesamtzahl der Sprünge während der Blasenwanderung die von der Blase zurückgelegte Wegstrecke und damit das bewegte Flüssigkeitsvolumen bestimmt werden.

Aus dem Verhalten der Impedanz des Mäanders lassen sich zwei mögliche Verfahren zur Detektion der Blasenposition ableiten:
Bei der dynamischen Methode (Inkrementalmessung) wird der Widerstand zwischen den Elektrodenpaaren aller Mäander des Füllstandsensors parallel mit vielen Messwerten pro Zeit ermittelt (hohe Samplingrate). Dadurch kann die Anzahl der während der Blasenbewegung auftretenden Sprünge gezählt werden. Da der Abstand in Längsrichtung zwischen den Teilelektrodenpaaren bekannt ist, lässt sich so die von der Blase in der Kapillare zurückgelegte Weglänge und daraus, zusammen mit dem Kapillarenquerschnitt, das bewegte Flüssigkeitsvolumen ermitteln. Dieses Messverfahren hat quasidigitalen Charakter. Der Widerstandsverlauf wird qualitativ bewertet und die absolute Höhe des Widerstandes wird nicht zur Auswertung herangezogen. Die Leitfähigkeit der Arbeitsflüssigkeit, die von einer Vielzahl von Faktoren, z.B. lonenkonzentration und - beweglichkeit oder Temperatur beeinflußt wird, spielt für das Meßergebnis eine untergeordnete Rolle. Die Leitfähigkeit muß lediglich ausreichend hoch sein damit sich die Sprünge noch detektieren lassen.

Bei der statischen Methode (Absolutmessung) wird der Widerstand zwischen den Elektrodenpaaren der Mäander im Ruhezustand gemessen. Alle vollständig von der in der Kapillare befindlichen Flüssigkeit bedeckten Mäander zeigen einen Minimalwert des Widerstandes. Wird einer der Mäander vollständig von der Blase überdeckt, zeigt dieser einen Maximalwert des Widerstandes. Werden die angrenzenden Mäander nur teilweise von der Blase überdeckt, treten Zwischenwerte auf. Ist die Abhängigkeit des Widerstandes von der Anzahl der flüssigkeitsüberdeckten Teilelektrodenpaare (kurzgeschlossene Teilelektroden) eines Mäanders qualitativ bekannt (Referenzwiderstandskurve) und der Minimal- bzw. Maximalwert verfügbar, kann durch Interpolation der Zwischenwerte auf die Position der Blasenfront über dem entsprechenden Mäander geschlossen werden. Das bewegte Flüssigkeitsvolumen ergibt sich wieder aus dem zurückgelegten Weg der Blase. Reißt der Flüssigkeitsfilm unterhalb der Blase sauber auf, so daß alle Teilelektrodenpaare die von der Blase bedeckt werden geöffnet werden, ist der Maximalwert des Widerstandes eines vollständig von der Luftblase überdeckten Mäanders eine konstante Größe, unabhängig von den Eigenschaften der Arbeitslösung bzw. -flüssigkeit. Da der Minimalwiderstand eines vollständig flüssigkeitsbedeckten Mäanders jederzeit neu bestimmt werden kann, ergibt sich die Möglichkeit einer in-situ-Kalibrierung. Darunter wird die Kalibrierung während des Betriebes verstanden. Dafür sollte sich jedoch bevorzugt dieselbe Flüssigkeit auf beiden Seiten der Blase befinden. Auch hier ergibt sich eine Unabhängigkeit des Meßverfahrens von der Leitfähigkeit der Arbeitslösung, soweit diese eine zur Messung notwendige Mindestleitfähigkeit überschreitet.

Ein wichtiger Vorteil der statischen im Vergleich zur dynamischen Meßmethode besteht darin, daß die Blasenposition sowohl vor als auch nach dem Dosiervorgang exakt bestimmt wird. Es kann daher mit hohen Wandergeschwindigkeiten der Blase gearbeitet werden, da das Auftreten von Sprüngen für die Messung unerheblich ist. Die Wandergeschwindigkeit der Blase ist bei der dynamischen Messmethode durch die Benetzungseigenschaften der Arbeitsflüssigkeit begrenzt.

Bevorzugte Ausführungsform ist die Aufteilung der Mäander in nicht wesentlich mehr als 10 Teilelektrodenpaare. Wird diese Anzahl wesentlich überschritten, so lassen sich, insbesondere im Falle der Anwendung des dynamischen Messverfahrens, die Leitfähigkeitssprünge zunehmend schwieriger voneinander unterscheiden. Daraus resultiert, neben der Möglichkeit die Blasenposition bei genau einem Mäander zu detektieren, ein Hauptvorteil der periodischen Elektrodenstruktur.

Für die Größe der Blase gilt, insbesondere für das statische Messverfahren, dass diese mindestens einen Mäander vollständig überdecken können sollte. Bevorzugt beträgt die Länge der Blase zwei Mäanderlängen. Dadurch wird gewährleistet, dass stets ein vollständig von der Blase überdeckter Mäander existiert.

Fehler, wie z.B. eine Verstopfung der Kapillare, werden bei beiden Verfahren erkannt.

Die Auflösung des Sensors wird von der Anzahl der Mäander pro Länge des Sensorchips und der Anzahl der Teilelektrodenpaare pro Mäander bestimmt. Der Abstand zwischen den Teilelektrodenpaaren in Längsrichtung und der Querschnitt der Kapillare definieren das minimale Flüssigkeitsvolumen, dessen Abgabe oder Aufnahme delektiert werden kann.

Bei Gleichstromspeisung der Mäander kann es in der Arbeitsflüssigkeit zu unerwünschten elektrochemischen Effekten an den Elektroden kommen. Deshalb werden die Elektroden bevorzugt mit einer Wechselspannung beaufschlagt, die eine Frequenz im Kilohertz-Bereich und/oder eine Amplitude im Bereich von 100 Millivolt aufweist. Für die Leitfähigkeitsmessung wird bevorzugt eine Wechselspannung im Bereich bis zu 100 Millivolt angelegt und als Ausgangssignal der resultierende Strom gemessen.

Die erfindungsgemäße Sensorchip zeichnet sich durch seine besonders kostengünstige Herstellung aus. Außerdem ermöglicht es eine einfache und genaue Positionsmessung der Flüssigkeitsoberfläche. Der erfindungsgemäße Sensor ermöglicht eine elektrische Flüssigkeitsstandsmessung in Kapillaren, wie sie besonders vorteilhaft bei der Pipettierung von Flüssigkeiten zum Einsatz kommt. Darüber hinaus kann die Positionsmessung der Leitfähigkeitsgrenzen zur Messung von Differenzdrücken verwendet werden, ähnlich dem klassischen Manometer, in dem die Druckdifferenz einen Niveauunterschied zwischen den beiden Armen eines U-förmigen Röhrchens verursacht. Der Kapillare würde dann dem Röhrchen entsprechen. Allgemein kann der erfindungsgemäße Sensor in einem fluidischen System die Bewegung verschiedener Flüssigkeiten detektieren, die in dem System verarbeitet und/oder analysiert werden.

Die vorliegende Erfindung wird ohne Beschränkung des allgemeinen Erfindungsgedankens im Folgenden anhand von Ausführungsbeispielen unter Bezugnahme auf die Zeichnungen detailliert beschrieben.
Fig. 1 zeigt schematisch den Querschnitt durch eine Kapillare (1), mit seitlich angebrachtem Sensorchip (2) mit mikrostrukturierten Metallelektroden (3).
Fig. 2 zeigt einen Ausschnitt eines erfindungsgemäßen Sensors mit einer möglichen Elektrodengeometrie in der Draufsicht.
Fig. 3 zeigt, wie die Bewegung einer Luftblase (9) über eine Mäanderstruktur (8) sukzessive die Teilelektrodenpaare (11) des Mäanders bedeckt und wieder freigibt.
Fig.4 zeigt einen typischen Stromverlauf bei Speisung eines Mäanders mit einer Wechselspannung, wie er aus der Blasenbewegung in Fig. 3 folgt.
Fig.5 zeigt den zeitlichen Verlauf der Stromkurven dreier benachbarter Mäander, wie er sich beim darüber hinweg Bewegen einer Blase über die drei Mäander ergibt.

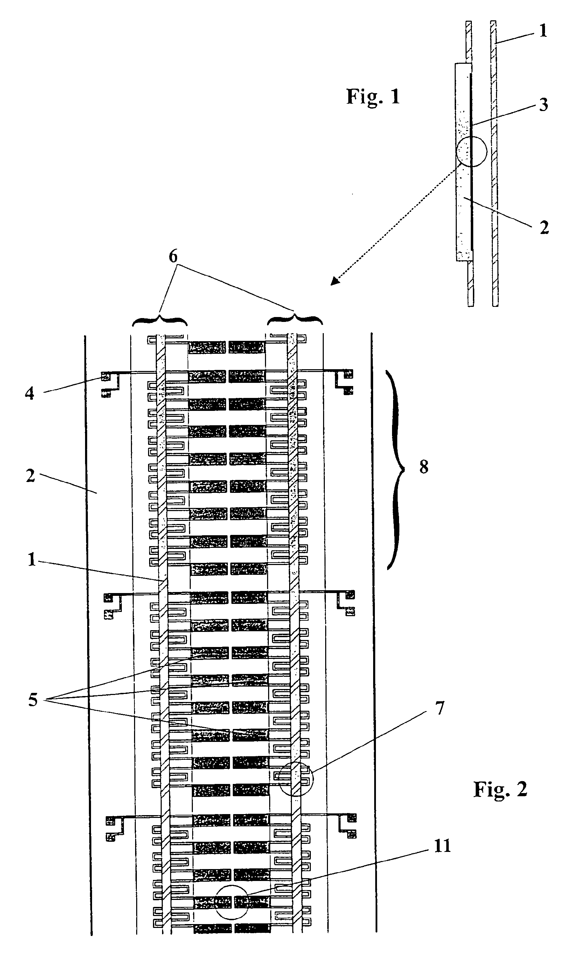

In Fig. 1 ist ein schematischer Querschnitt durch eine Kapillare (1), z.B. aus Glas, mit seitlich angebrachtem Sensorchip (2), mit mikrostrukturierten Metallelektroden (3), wie er bevorzugt bei einer Pipette mit Füllstandssensor ausgebildet ist, gezeigt. Der Sensorchip besteht bevorzugt aus einem Siliziumsubstrat worauf Platinelektroden aufgebracht sind.

In Fig. 2 ist ein Ausschnitt eines erfindungsgemäßes Sensors mit einer möglichen Elektrodengeometrie in der Draufsicht dargestellt. Die aktiven, freiliegenden Bereiche (5) der Elektroden befinden sich innerhalb der Kapillare (1) und sind über die gesamte Länge des Chips verteilt. Die Elektrodenstruktur besteht dabei aus einer sich ständig wiederholenden Anordnung. Jede Elektrode besteht aus mehreren sensoraktiven Teilelektroden (5), wobei immer zwei Elektroden ein Elektrodenpaar (Mäander) (8) bilden. Die Teilelektroden der Elektrodenpaare stehen sich als Teilelektrodenpaare (11) gegenüber. Jede Elektrode hat dabei eine eigene elektrische Anschlußmöglichkeit (Bondpad) (4). Aufeinanderfolgende Mäander sind so angeordnet, daß der Abstand zwischen den Teilelektrodenpaaren (11) über die gesamte Chiplänge stets konstant ist. Jeder Mäander besteht aus zwei Metallelektroden mit 8 einander gegenüberliegenden Teilelektrodenpaaren. Die einzelnen Teilelektroden auf jeder Seite eines Mäanders sind in Reihe geschaltet. Die elektrische Verbindung zwischen den einzelnen Teilelektroden auf einer Seite eines Mäanders hat dabei einen ohmschen Widerstand welcher nicht zu gering sein sollte. Bei der dargestellten Ausführungsform wird der Widerstand durch die Verlängerung der Verbindung in Schlangenlinienform (7) erhöht. Der Abstand zwischen benachbarten Teilelektrodenpaaren (11) in Längsrichtung ist stets derselbe. Bevorzugt ist ein Teilelektrodenabstand in Längsrichtung von einigen 10 µm. Je geringer der Abstand der Teilelektrodenpaare in Längsrichtung, desto höher ist die Auflösung des Sensors, d.h. desto kleinere Flüssigkeitsmengen können dosiert werden. Die freiliegenden, aktiven Elektrodenbereiche können mit einer Flüssigkeit innerhalb der Kapillare in Kontakt kommen. Die Ableitungen zu den außerhalb der Kapillare liegenden Bondpads sind von einer Passivierungsschicht (6) bedeckt.

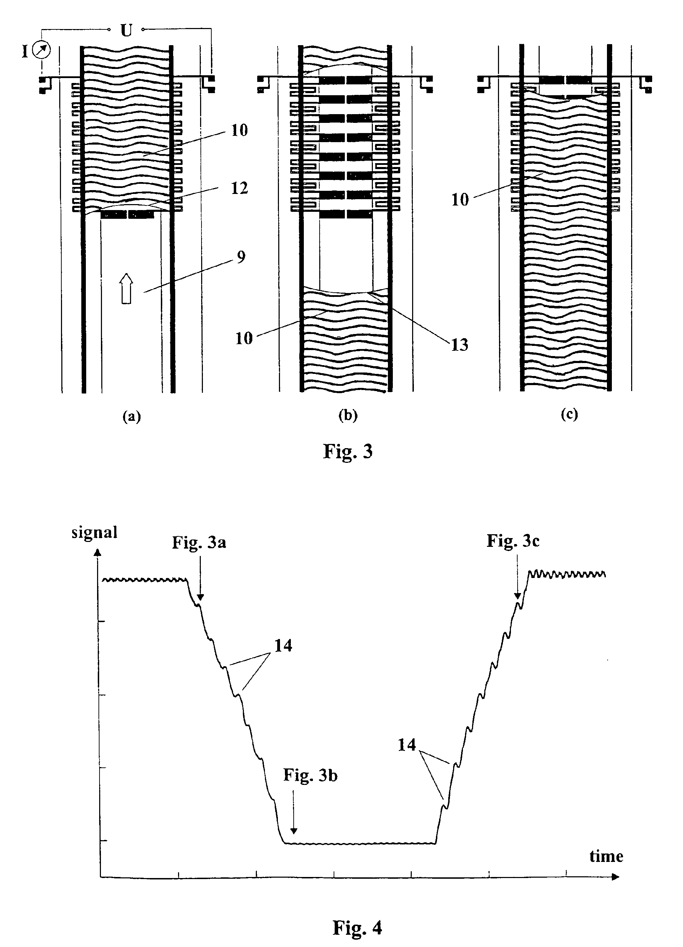

In Fig. 3 wird die Bewegung einer Luftblase (9) über eine Mäanderstruktur, wie sie sukzessive die einzelnen Teilelektrodenpaare (11) des Mäanders bedeckt und wieder freigibt, dargestellt. Eine leitfähige Flüssigkeit (10) umschließt eine Luftblase, die sich aufwärts bewegt (durch Pfeil angedeutet), von beiden Seiten. Sobald die Vorderfront (12) der Blase das unterste Teilelektrodenpaar freilegt (Fig.3a), sinkt der Strom zwischen den sich gegenüberliegenden Elektroden des Mäanders ab. Er erreicht ein Minimum, wenn die Blase den Mäander vollständig überdeckt (Fig. 3b) und steigt nach und nach wieder an, während die Blase über den Mäander hinweg wandert (Fig. 3c). Der Strom erreicht seinen Ausgangswert nachdem die Hinterfront (13) der Blase das oberste Teilelektrodenpaar des Mäanders überschritten hat.

In Fig. 4 ist der Verlauf des verstärkten Ausgangssignals (Strom) eines Mäanders mit 8 Teilelektrodenpaaren über der Zeit (time) aufgetragen. Die Zuordnung zu den Positionen der Blase in Fig. 3a bis Fig. 3c ist an den entsprechenden Stellen der Kurve vorgenommen. Jedes mal, wenn die Blasenfront ein weiteres Teilelektrodenpaar erreicht hat , ändert sich die benetzte Elektrodenfläche sprunghaft. Die Folge ist eine ebenso sprunghafte Änderung (Sprünge) (14) der Stromkurve. Wie ausgeprägt diese Sprünge sind hängt von den Benetzungseigenschaften der Sensoroberfläche zwischen den Elektroden ab. Ist sie hydrophob, reißt der Flüssigkeitsfilm unterhalb der Blase sofort auf und der elektrische Kontakt zwischen den gegenüberliegenden Teilelektroden wird abrupt unterbrochen. Es entsteht ein Peak. Ist die Chipoberfläche hydrophil, so bleibt unterhalb der Blase partiell ein dünner Flüssigkeitsfilm bestehen. Der Peak wird verwaschen, es entsteht ein Plateau. Mit zunehmender Geschwindigkeit der Blase reißt der Flüssigkeitsfilm insbesondere an der Vorderfront der Blase nur verzögert auf. Dadurch wird das Ausgangssignal geglättet. Es entstehen ebenfalls Plateaus. Das unbestimmte Abreißverhalten des Flüssigkeitsfilms unterhalb der Blase ist zudem für die komplexe Form des Kurvenmaximums mit zusätzlichen kleinen Peaks verantwortlich. Bei hohen Wandergeschwindigkeiten der Blase, hydrophiler Oberfläche und geringer Meßfrequenz lassen sich die Sprünge zunehmend schlechter detektieren. Diese sind dann im Kurvenverlauf vollständig verwischt.

Die Signalform ist von der Bewegungsrichtung der Blase unabhängig. Sowohl die aus der Aufwärtsbewegung resultierende Kurve, als auch die aus der Abwärtsbewegung resultierende Kurve können, bei identischer Luftblase, beliebig oft reproduziert werden.

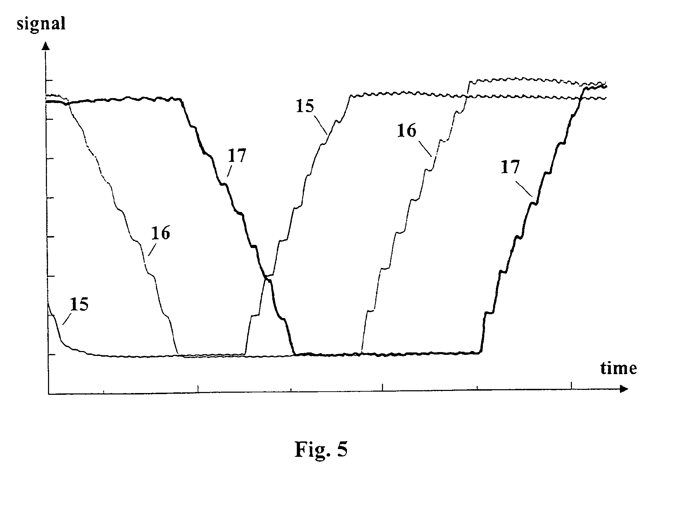

In Fig. 5 sind die Ausgangssignale, bezeichnet mit (15), (16) und (17), von drei benachbarten Mäandern bei Bewegung einer Blase, mit konstanter Geschwindigkeit, über die Mäander hinweg über der Zeit aufgetragen. Die Messung erfolgte dabei parallel, d.h. die Ausgangssignale der drei Mäander wurden gleichzeitig aufgezeichnet. Die Darstellung verdeutlicht den Vorteil der Positionsmessung der Blase durch das Detektieren von Sprüngen des Stromverlaufes. So muß zum Beispiel der Maximalwert des Absolutwertes des Ausgangssignales, bei vollständiger Flüssigkeitsbedeckung, der Mäander nicht absolut identisch sein. Trotz unterschiedlicher absoluter Stromwerte z.B. zwischen den Kurven 15 und 16 kann die Blasenposition durch Abzählen der Sprünge exakt bestimmt werden.

## Patentansprüche

1. Sensorelement zur elektrischen Positionsmessung von Flüssigkeitsständen mit einem Substrat (2) und mehreren einzeln kontakfiierbaren, elektrisch nicht miteinander verbundenen, auf das Substrat aufgebrachten Elektroden (3), **dadurch gekennzeichnet, dass** die Elektroden über die Sensorlänge sich periodisch wiederholende Elektrodenpaare (8) bilden und aus mit elektrischen Verbindungen (7) vernetzten sensoraktiven Teilelektroden (5) bestehen, wobei sich die Teilelektroden von jeweils zwei Elektroden immer als Teilelektrodenpaare (11) beabstandet gegenüberliegen, wobei jeder Teilelektrode einer ersten Elektrode jeweils eine Teilelektrode einer zweiten Elektrode beabstandet gegenüberliegt.

2. Sensorelement nach Anspruch 1, **dadurch gekennzeichnet, dass** die elektrischen Verbindungen (7) der vernetzten Teilelektroden mit einer passivierenden Schicht (6) überzogen sind.

3. Sensorelement nach mindestens einem der Ansprüche 1 bis 2, **dadurch gekennzeichnet, dass** die sich paarweise gegenüberliegenden Teilelektroden immer den gleichen Abstand aufweisen und/oder die Abstände der Teilelektrodenpaare in Längsrichtung des Sensorelements über die gesamte Länge des Sensorelements konstant sind und/oder die Anzahl der Teilelektrodenpaare pro Elektrodenpaar konstant ist.

4. Sensorelement nach mindestens einem der Ansprüche 1 bis 3, **dadurch gekennzeichnet, dass** der Abstand der Teilelektrodenpaare in Längsrichtung im Bereich von 100 µm liegt.

5. Sensorelement.nach mindestens einem der Ansprüche 1 bis 4, **dadurch gekennzeichnet, dass** das Substrat aus Silizium, Glas oder Kunststoff gefertigt ist.

6. Sensorelement nach mindestens einem der Ansprüche 1 bis 5, **dadurch gekennzeichnet, dass** die Elektroden aus Platin, Iridium oder Gold gefertigt sind.

7. Anordnung mit einem Sensorelement nach mindestens einem der Ansprüche 1 bis 6 zur Vermessung einer Kapillarenfüllung, **dadurch gekennzeichnet, dass** das Sensorelement derart an einer Kapillare befestigt ist, dass sich die sensoraktiven Teilelektroden (5) innerhalb der Kapillare befinden und die elektrischen Anschlussmöglichkeiten sich außerhalb der Kapillare befinden und dass sich mindestens eine Leitfähigkeitsgrenze der Kapillarenfüllung im Bereich des Sensorelements befindet.

8. Anordnung nach Anspruch 7, **dadurch gekennzeichnet, dass** zwei Leitfähigkeitsgrenzen von Arbeitsflüssigkeiten in der Kapillare eine Blase im Bereich des Sensorelements bilden, welche auf beiden Seiten von Arbeitsflüssigkeit eingegrenzt ist.

9. Anordnung nach Anspruch 8, **dadurch gekennzeichnet, dass** die Blase gasgefüllt ist und/oder die Länge der Blase im Bereich der doppelten Ausdehnung eines Elektrodenpaares in Längsrichtung ist und/oder dass es sich auf beiden Seiten der Blase um dieselbe Arbeitsflüssigkeit handelt.

10. Verfahren zur Messung von Flüssigkeitsständen mit einer Anordnung nach einem der Ansprüche 7 bis 9, **dadurch gekennzeichnet, dass** durch Messung des Widerstandes jedes einzelnen Elektrodenpaares (8) im Ruhezustand der Arbeitsflüssigkeit und durch Vergleich der Widerstandswerte mit für die Flüssigkeitsbedeckung oder nicht Bedeckung charakteristischen Minimal-/ und Maximalwerten ermittelt wird, welche Elektrodenpaare von der Arbeitsflüssigkeit bedeckt sind und welche davon nicht bedeckt sind und daraus die Position der Leitfähigkeitsgrenze oder der Blase auf einem bestimmten Elektrodenpaar detektiert wird.

11. Verfahren zur Messung von Flüssigkeitsständen mit einer Anordnung nach einem der Ansprüche 7 bis 9, **dadurch gekennzeichnet, dass** die Position einer Leitfähigkeitsgrenze innerhalb eines Elektrodenpaares (8), im Ruhezustand der Arbeitsflüssigkeit, durch Vergleich des zwischen dem Minimal-/ und Maximalwiderstandswert des Elektrodenpaares liegenden Zwischenwert mit einer Referenzwiderstandskurve des Elektrodenpaares ermittelt wird und so auf die Position der Leitfähigkeitsgrenze bei einem bestimmten Teilelektrodenpaar (11) geschlossen wird.

12. Verfahren nach mindestens einem der Ansprüche 10 bis 11 **dadurch gekennzeichnet, dass** aus der detektierten Position der Blase oder der Leitfähigkeitsgrenze vor und nach einer Bewegung derselben die zurückgelegte wegstrecke ermittelt wird.

13. Verfahren zur Messung von Flüssigkeitsständen mit einer Anordnung nach einem der Ansprüche 8 bis 9, **dadurch gekennzeichnet, dass** durch paralleles Überwachen der Widerstandswerte aller Elektrodenpaare (8) Sprünge der Widerstandswerte, bei Bewegung der Blase, detektiert werden und aus der Anzahl der Sprünge die von der Blase zurückgelegte Wegstrecke ermittelt wird.

14. Verfahren nach mindestens einem der Ansprüche 12 bis 13, **dadurch gekennzeichnet, dass** aus der zurückgelegten Wegstrecke das transportierte Flüssigkeitsvolumen ermittelt wird.

15. Verfahren nach mindestens einem der Ansprüche 10 bis 14, **dadurch gekennzeichnet, dass** die Widerstandsmessung der Elektrodenpaare durch Messung des resultierenden Stromes nach Anlegen einer Wechselspannung an die Elektroden ermittelt wird.

16. Verfahren nach Anspruch 15, **dadurch gekennzeichnet, dass** die Wechselspannung eine Frequenz im Kiloherz-Bereich und/oder eine Amplitude im Bereich von 100 Millivolt aufweist.

## Claims

1. Sensor element for the electrical position measurement of liquid levels, having a substrate (2) and several individually contactable electrodes (3) which are applied to the substrate and not interconnected electrically, **characterized in that** the electrodes form periodically repeating electrode pairs (8) over the length of the sensor and comprise sensor-active sub-electrodes (5) networked with electrical connections (7), whereby the sub-electrodes of respectively two electrodes always lie as sub-electrode pairs (11) opposite and apart from each other, whereby each sub-electrode of a first electrode lies opposite and apart from respectively a sub-electrode of a second electrode.

2. Sensor element according to claim 1, **characterized in that** the electrical connections (7) of the networked sub-electrodes are coated with a passivating layer (6).

3. Sensor element according to at least one of the claims 1 to 2, **characterized in that** the sub-electrodes lying opposite each other in pairs always have the same distance from each other and/or the distances between the sub-electrode pairs in longitudinal direction of the sensor element are constant over the overall length of the sensor element and/or the number of sub-electrode pairs per electrode pair is constant.

4. Sensor element according to at least one of the claims 1 to 3, **characterized in that** the distance between the sub-electrode pairs in longitudinal direction lies in the range of 100 µm.

5. Sensor element according to at least one of the claims 1 to 4, **characterized in that** the substrate is made from silicon, glass or plastic.

6. Sensor element according to at least one of the claims 1 to 5, **characterized in that** the electrodes are made from platinum, iridium or gold.

7. Arrangement with a sensor element according to at least one of the claims 1 to 6 for measuring a capillary filling, **characterized in that** the sensor element is fastened to a capillary such that the sensor-active sub-electrodes (5) are inside the capillary and the electrical connection possibilities are outside the capillary and such that at least one conductivity limit of the capillary filling lies in the region of the sensor element.

8. Arrangement according to claim 7, **characterized in that** two conductivity limits of working liquids in the capillary form a bubble which lies in the region of the sensor element and is bounded on both sides by working liquid.

9. Arrangement according to claim 8, **characterized in that** the bubble is filled with gas and/or the length of the bubble is in the region of double the expansion of an electrode pair in longitudinal direction and/or it is the same working liquid on both sides of the bubble.

10. Method for measuring liquid levels using an arrangement according to one of the claims 7 to 9, **characterized in that** through measurement of the resistance of each individual electrode pair (8) in the rest condition of the working liquid and through comparison of the resistance values with the minimum and maximum values characteristic for liquid coverage or non-coverage it is determined which electrode pairs are covered by the working liquid and which are not covered by it, on the basis of which the position of the conductivity limit or of the bubble on a certain electrode pair is detected.

11. Method for measuring liquid levels using an arrangement according to one of the claims 7 to 9, **characterized in that** the position of a conductivity limit inside an electrode pair (8), in the rest condition of the working liquid, is determined through comparison of the intermediate value lying between the minimum and maximum resistance value of the electrode pair with a reference resistance diagram of the electrode pair, on the basis of which the position of the conductivity limit at a certain sub-electrode pair (11) is concluded.

12. Method in accordance with at least one of the claims 10 to 11, **characterized in that** the detected position of the bubble or the conductivity limit before and after a movement of the same is used as basis for determining the distance covered.

13. Method for measuring liquid levels using an arrangement according to one of the claims 8 to 9, **characterized in that** through parallel monitoring of the resistance values of all electrode pairs (8) any jumps in the resistance values upon movement of the bubble are detected and the distance covered by the bubble is determined from the number of jumps.

14. Method according to at least one of the claims 12 to 13, **characterized in that** the transported liquid volume is determined from the distance covered.

15. Method according to at least one of the claims 10 to 14, **characterized in that** the resistance measurement of the electrode pair is determined through measurement of the resulting current after applying an alternating voltage to the electrodes.

16. Method according to claim 15, **characterized in that** the alternating voltage has a frequency in the kilohertz range and/or an amplitude in the range of 100 millivolt.

## Revendications

1. Elément de détection pour la mesure électrique de position de niveaux de liquide, muni d'un substrat (2) et de plusieurs électrodes (3) placées sur le substrat pouvant être mises en contact individuellement et non reliées électriquement entre elles, **caractérisé en ce que** les électrodes forment des paires d'électrodes (8) se répétant périodiquement sur la longueur du détecteur (8) et sont constituées d'électrodes partielles actives pour la détection (5) reliées en réseau avec des connexions électriques (7), les électrodes partielles de chaque seconde électrode se faisant toujours face de manière espacée sous forme de paires d'électrodes partielles (11), chaque électrode partielle d'une première électrode faisant face de manière espacée à une électrode partielle d'une seconde électrode.

2. Elément de détection selon la revendication 1, **caractérisé en ce que** les connexions électriques (7) des électrodes partielles reliées en réseau sont revêtues d'une couche passivante (6).

3. Elément de détection selon au moins l'une des revendications 1 à 2, **caractérisé en ce que** les électrodes partielles se faisant face par paires sont toujours à la même distance et/ou **en ce que** les distances des paires d'électrodes partielles dans le sens longitudinal de l'élément de détection sont constantes sur toute la longueur de l'élément de détection, et/ou **en ce que** le nombre de paires d'électrodes partielles par paire d'électrodes est constant.

4. Elément de détection selon au moins l'une des revendications 1 à 3, **caractérisé en ce que** la distance entre les paires d'électrodes partielles dans le sens longitudinal se situe dans une plage de 100 µm.

5. Elément de détection selon au moins l'une des revendications 1 à 4, **caractérisé en ce que** le substrat est fabriqué à partir de silicium, de verre ou de matière plastique.

6. Elément de détection selon au moins l'une des revendications 1 à 5, **caractérisé en ce que** les électrodes sont fabriquées à partir de platine, d'iridium ou d'or.

7. Agencement muni d'un élément de détection selon au moins l'une des revendications 1 à 6, pour la mesure d'un remplissage de capillaire, **caractérisé en ce que** l'élément de détection est fixé sur un capillaire de telle sorte que les électrodes partielles actives pour la détection (5) se trouvent à l'intérieur des capillaires et les possibilités de raccordement électrique, à l'extérieur du capillaire, et **en ce qu'**au moins un seuil de conductivité du remplissage de capillaire se trouve dans la zone du détecteur.

8. Agencement selon la revendication 7, **caractérisé en ce que** deux seuils de conductivité des liquides de travail forment une bulle dans le capillaire dans la zone de l'élément de détection, cette bulle étant limitée sur les deux côtés du liquide de travail.

9. Agencement selon la revendication 8, **caractérisé en ce que** la bulle est remplie de gaz et/ou en ce que la longueur de la bulle dans la zone de la double dilatation d'une paire d'électrodes se trouve dans le sens longitudinal, et/ou **en ce qu'**il s'agit du même liquide de travail sur les deux côtés de la bulle.

10. Procédé de mesure des niveaux de liquide à l'aide d'un agencement selon l'une des revendications 7 à 9, **caractérisé en ce qu'**en mesurant la résistance de chaque paire d'électrodes individuelle (8) lorsque le liquide de travail est au repos, et en comparant les valeurs de résistance aux valeurs caractéristiques minimale et maximale de la couverture par le liquide ou de la non couverture, il est possible de déterminer quelles sont les paires d'électrodes recouvertes par le liquide de travail et quelles sont celles qui ne le sont pas et, à partir de là, de détecter la position du seuil de conductivité ou de la bulle sur une paire d'électrodes donnée.

11. Procédé de mesure de niveaux de liquide à l'aide d'un agencement selon l'une des revendications 7 à 9, **caractérisé en ce que** l'on peut déterminer la position d'un seuil de conductivité à l'intérieur d'une paire d'électrodes (8), à l'état de repos du liquide de travail, en comparant la valeur intermédiaire située entre les valeurs de résistance minimale et maximale de la paire d'électrodes à une courbe de résistance de référence de la paire d'électrodes et ainsi, déduire la position du seuil de conductivité sur une paire d'électrodes partielles donnée (11).

12. Procédé selon au moins l'une des revendications 10 à 11, **caractérisé en ce qu'**à partir de la position détectée de la bulle ou du seuil de conductivité avant et après un mouvement de ceux-ci, il est possible de déterminer la distance parcourue.

13. Procédé de mesure de niveaux de liquide à l'aide d'un agencement selon l'une des revendications 8 à 9, **caractérisé en ce que** la surveillance parallèle des valeurs de résistance de toutes les paires d'électrodes (8) permet de détecter les sauts des valeurs de résistance lors du mouvement de la bulle et, à partir du nombre de sauts, de déterminer la distance parcourue par la bulle.

14. Procédé selon au moins l'une des revendications 12 à 13, **caractérisé en ce qu'**à partir de la distance parcourue, il est possible de déterminer le volume de liquide acheminé.

15. Procédé selon au moins l'une des revendications 10 à 14, **caractérisé en ce qu'**il est possible de mesurer la résistance de la paire d'électrodes en mesurant le courant résultant de l'application d'une tension alternative sur les électrodes.

16. Procédé selon la revendication 15, **caractérisé en ce que** la tension alternative affiche une fréquence dans la plage des kilohertz et/ou une amplitude dans la plage de 100 millivolts.
